# EUROPEAN PATENT SPECIFICATION

(11) **EP 2 343 856 B1**
(45) Date of publication and mention of the grant of the patent: **19.12.2018**
(21) Application number: 11000037.9
(22) Date of filing: 05.01.2011
(51) Int. Cl.: H04L 12/28

(54) **Dynamic multicode home networking modem device**
Dynamische Multicode-Heimnetzwerkmodemvorrichtung
Dispositif modem de réseautage domestique dynamique multicode

(30) Priority: 11.01.2010 US 294081 P
(43) Date of publication of application: 13.07.2011
(73) Proprietor: Lantiq Beteiligungs-GmbH & Co. KG, 85579 Neubiberg (DE)
(72) Inventor: Heller, Peter, Somerville, MA 02144 (US); Pandey, Pramod, 82008 Unterhaching (DE); Gross, Richard, Acton, MA 01720 (US)
(74) Representative: Kraus & Weisert Patentanwälte PartGmbB

(56) References cited:
- US-A1- 2007 153 815
- US-A1- 2008 130 640
- US-B1- 6 243 413

## Description

The embodiments relate to a Home Network and a method for providing Home Networking and, more particularly, for coordinating devices that interface using different industry standards or protocols for Home Networking.

A Home Network or home area network (HAN) is typically defined as a residential local area network (LAN) used for communication between digital devices within a home or residence. A HAN usually includes one or more personal computers, accessories, such as printers and mobile computing devices. It is anticipated that HANs will soon be commonplace in households throughout the world.

It is envisaged HANs will integrate not only consumer electronics in the household, such as televisions, VCRs or Video Recorders, Video Playback machines, telephones or IP phones, faxes, game consoles, but in addition any electronic device. These electronic devices will include household appliances, such as air conditioning, heating units, hot water boilers, solar and thermal energy devices, temperature sensors and power metering, battery cells and even home security systems. All will one day be connected and integrated via the Home Network. Some of these electronic devices will communicate through the HAN by means of smart parts, i.e., microprocessors and programming, that will enable them to send, receive (and perhaps also route) data via the Home Network thereby providing a truly integrated home.

An important function provided by the HAN is the management and operation of the household or residence via an integrated local area network. Not only will communication and consumer electronic devices (entertainment systems) be coordinated but also appliances, including power and metering devices, as well as security systems. Hence, a user will be able to manage all aspects of his/her home. This may include, for example, management of consumer electronics devices for leisurely activities, such as controlling a digital video recorder (DVR) from a lap top computer (laptop) to record broadcast shows at certain times, restricting access to devices, or perhaps uploading content from the Internet. Further, telecommunications in the residence may be controlled, such as the ability to place telephone or teleconference calls, and select which equipment will connect, upload content such as a family album from the computer to an internet web site. It may also include management of energy consumption in the household, including programming energy usage of certain devices, e.g., turning off equipment to conserve power, or turning on devices at appropriate times. All of these tasks can and will be managed from the homeowner's personal computer.

A Home Network may include Infrastructure Devices and Client Devices. Infrastructure Devices include, for example, a broadband modem for connection to the internet (e.g., a DSL modem using the phone line, or cable modem using a cable internet connection), a residential gateway (sometimes called a router) connected between the broadband modem and the rest of the network, and an access point (wireless or otherwise). The gateway enables multiple devices to connect to the internet simultaneously. The residential gateways, hubs/switches, DSL modems, and access points may be combined. For example, the wireless access point is usually implemented as a feature rather than a separate box, for connecting wireless devices.

Client Devices of the Home Network may include a PC, or multiple PCs including laptops, Netbooks and Tablet PC's. These may also include entertainment peripherals, including DVRs like Television Input / Video Output (TiVo), digital audio players, game machines (consoles), stereo systems, and IP set-top boxes as well as TVs themselves. Further Client Devices are more often including Internet Phones (VoIP) and Smart Phones connected via WiFi.

In order to connect the devices In the Home Network various devices may be used. Already discussed were routers that switch traffic within the HAN according to known methodologies. The actual physical transmission may be accomplished by any physical media, or any combination thereof. Hence, an xDSL box provides connection to the outside world and is coupled to various systems in the residence over a wireless router. A printer might be connected via an optical cable via a bridge or to another device that acts as a proxy. To connect the various media types a network bridge may be provided, for example, giving a wired device, access to a wireless network. A network hub/switch may be used as a central networking hub containing a number of Ethernet ports for connecting multiple networked devices. A network attached storage (NAS) device can be provided for storage on the network. A print server can be used to share printers among computers on the network. These systems may operate with the addition of a home server for increased functionality.

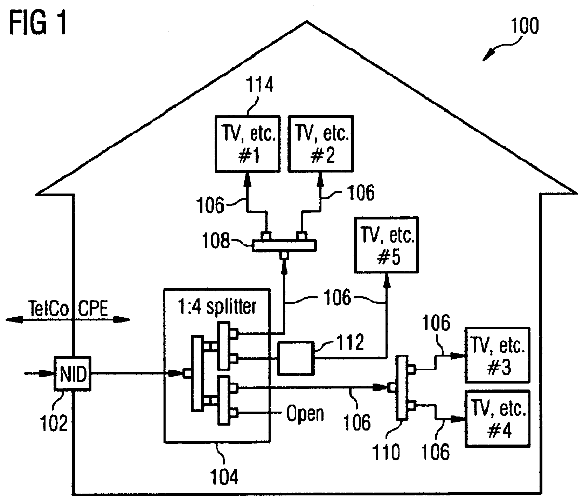

In an example, a typical home cable TV topology 100 is presented in FIG. 1. In this topology 100, a Network Interface Device (NID) 102 demarcates a line between telecommunication company equipment ("Tel Co.") and customer's equipment at the customer's premises ("CPE"), such as a home or business. The telecommunications company provides a wide-band cable TV signal to the CPE through the NID 102. In the illustrated example, the cable TV signal is distributed through a 1:4 splitter 104 , over existing home wiring 106 (such as coaxial cable, a pair of twisted copper wires, power wiring, etc), though 1:2 splitters 108 , 110 , and out to TVs in different areas of the CPE. For remote areas with relatively long branches (e.g., TV # 5), an amplifier 112 may be used to boost the signal.

As already mentioned, the Home Network is optionally connected to the Internet to provide a shared Internet access, often a broadband service through a cable TV, Wireless LAN or WiFi, or Digital Subscriber Line (DSL) provider. Within the residence, the signals may be ported through a number of different media including Optical Fiber, RF coaxial cable, power lines, wireless space, and twisted pair telephone wires. Presently, coax is used as the main media in North America, but also telephone wires are used commonly in multi dwelling units (MDU). In Japan, optical fiber is the media of choice amongst new users of the Home Network. As noted above, signaling through power lines within the residence are becoming more popular in both Europe and USA. Of course, any other transmission media are possible here.

By use of powerline as the transmission media, the Home Network is accessed by simply plugging in the Computer into a wall socket using any signaling media. Principally for this reason, the use of power lines within the residence is gaining momentum and is expected to outpace other media. Indeed, when the interface for accessing power lines to the Home Network become integrated into electronic devices the use of power lines is expected to dominate the market. With the integration of the power interfaces and the devices, the user is able to access the Home Network simply by plugging the device into any power source. No additional wiring or external interfaces are needed and access is thus achieved in every room that includes a wall socket. With powerline, the user device is able to both be powered and access digital information from the electrical wall socket in one go.

Not surprisingly, competing Home Networking Standards have developed to integrate devices over the Home Network. The ITU-T G.hn and IEEE Powerline standard provide high-speed (up to 1 Gbit/s) local area networking over existing home wiring. Recently, the IEEE passed proposal P1901 which grounded a standard within the Market for wireline products produced and sold by companies that are part of the HomePlug Alliance. The Homeplug Alliance itself promulgates a proprietary protocol known as HomePlug that again differs from either G.hn or IEEE 1901. Other Standards and protocols have developed for cable, such as, Multimedia Over Coax Alliance (MOCA) and automobile networking, such as Controller Area Network Bus (CAN-bus). Yet another standard promoted by the Home Phoneline Networking Alliance (HPNA) was originally proposed specifically for IPTV applications. These and other Standards are published, and are herein explicitly referenced to.

It has emerged that modems that are designed to operate in one standard or protocol cannot communicate with modems operating in the other standard or protocol configuration. A number of powerline Home Networking modems, for example, are either HomePlug AV or ITU G.hn and they cannot communicate directly to each other. The result is that devices that are connectable over the same physical media (e.g. powerline AC wiring, etc) are not able to communicate with each other. Hence, a user must take special care that all devices purchased for a system support the same standard or protocol. This can be quite inconvenient and costly for a user.

In the case of a user interested in setting up a Home Network for the first time, requiring a user to comply with a particular standard or protocol is onerous at best. The user is not only forced to purchase particular devices from a brand the user does not want, but the devices themselves may not offer services or applications that satisfy the requirements of the user. Worse, the user might have to purchase a special integration device that connects one type of standard (protocol) to another, thereby not only substantially increasing costs to the user but also burdening the Home Network with slower performance.

Where the user is adding devices to an existing system, the user might discover that existing devices are based on a standard or protocol that no longer finds favor in the industry and, therefore is no longer compatible with presently provided protocols. While most manufacturers strive for backwards compatibility, such warranties never completely fix every Network setup. As in the existing case, the user may be forced to purchase additional equipment to integrate different systems, which is both costly to the user and would slow network performance.

While many electronics markets are prone to resolving to a single standard or protocol, the Home Networking arena is likely to continue down separate paths for some time. Unlike other markets, such as consumer electronics, the Home Networking environment affects a much broader scope of vendors and cuts across multiple markets. Invariably, different markets and manufacturers will require their own protocol. For example, a telephone may prefer to operate over wireless whereas electronic and appliances may operate through a convenient wall socket. These various arrangements, as well as individual manufacturer requirements, may dictate different Home Networking protocols be used for these different devices.

A possible solution may be to provide two distinct networks, each configured to communicate within a different standard or protocol. However, such a solution does not allow the distinct networks to communicate directly. They could operate such that they share the bandwidth and do not interfere with each other, but they will not communicate with each other. For example, when diverse modems of different standards or protocols are placed on the same physical media, they tend to operate in collision detect/avoid mode, thereby decreasing the overall bandwidth efficiency available in the network. In such an arrangement, each of the devices waits for channels to be clear, contends for a transmission slot, and occupies a channel to the exclusivity of other devices while receiving/transmitting data on the assigned channel. This would mandate the user purchasing additional equipment (or devices specially equipped for CA/CD) and would also require that the system designate a master device for regulating traffic. Clearly, neither of these shortcomings are advantageous for a Home Network.

As long as diversity in types of standards and protocols continues to exist, there will be a dire need for these systems to cooperate and, in fact, integrate. What is needed is not a patch, but an integrated solution that is capable at once in dealing with and integrating two or more standards and/or protocols. What is needed is a solution that dissolves the foregoing difficulties. What the market demands is a solution that is provided by the present implementations and embodiments. US 2007/0153815 A1 discloses a digital communication system and method for establishing and maintaining simultaneous operation of asynchronous and isochronous communications over the same or different physical communication media, wherein the system includes a Multimode Network Controller having connections to multiple asynchronous and isochronous information sources.

At least one embodiment allows a single modem device to operate in a Multimode configuration to communicate to Home Networking modems on the same media that follow different industry standards. In one aspect, the modem device of at least one embodiment is designed to operate in both the HomePlug AV/P 1901 standard and the ITU G.hn standard over powerline AC wiring. Although subsequent examples & operations in this description may refer to particular standards, the embodiments are not limited thereto and are relevant to additional Standards or non-standardized (proprietary) protocols and techniques. Additionally the Multimode configuration may support two standards from the same standards organization. For example, a Multimode modem that supports ITU G.hn and ITU G.HNem.

The Multimode Home Networking modem of the present embodiments participate in both network domains simultaneously and dynamically switch to allow reliable communication between the two network domains following the corresponding standards. Bandwidth can then be efficiently used between the two networking domains and information can be passed from one domain to the other. Additionally, the embodiments can cover a device can be configured to operate over coaxial cable at RF frequencies in the MOCA mode and the ITU G.hn standard.

The Multimode device of the present embodiments provide the ability to integrate a plurality of types of standards and/or protocols, including HomePlug AV and G.hn. Furthermore the present embodiments can communicate with each type of modem by dynamically switching configurations. The switching is performed either rapidly, e.g., on a packet by packet basis, or more slowly, e.g., over scheduled time blocks within a MAC (media access control) cycle.

It should be borne in mind that the present embodiments differ from configuring a modem on initialization to a specific standard or protocol. Namely, the present embodiments allow for the dynamic switching of configurations on the fly, that is. in operation or data communication mode. Initialization simply configures the modem statically at the start up to one type of operation or the other.

In one aspect, the Multimode modem of the present embodiments register on multiple networks, i.e., for both the HomePlug AV and G.hn networks and communicates to any and all modems on each network. Hence the modem dynamically switches Operation between the modes.

In another aspect, the Multimode modem acts as a relay to receive packets from modems operating on one standard (a single mode modem) and transmit them to modems operating on the other standard (a single mode modem of the other standard).

The Multimode modem further is configured as a bridge, or proxy, in another aspect to allow modems to pass information to each other even though they cannot directly do so.

The Multimode modem of the present embodiments further are configured as domain master on each network, in yet another aspect, thereby efficiently managing the bandwidth in the overall network.

In yet another aspect, the Multimode modem of the present embodiments dynamically switches operation between the different standards and/or protocols to optimize the bandwidth efficiency of the network.

Implementation specific approaches can result in significantly modified designs that still achieve the goal of one or more Multimode modems according to the embodiments herein.

The independent claims define the invention in various aspects. The dependent claims define embodiments of the invention.

In a first aspect, the invention encompasses a modem for use in a Home Network. The modem is adapted to couple devices that each support a standard for transmitting/receiving data over the Home Network. The modem is adapted such that not all coupled devices need to support the same standard. Thus, from one coupled device to another, the supported standard can differ. The modem is further configured to be capable to transmit and/or receive data in both a first mode and in a second mode. The first mode provides for transmission/reception according to a first protocol for use in transmitting and/or receiving data between devices of the Home Network. The second mode provides for transmission/reception according to a second protocol for use in transmitting and/or receiving data between devices of the Home Network. The modem comprises a controller adapted to dynamically switch the modem between the first mode and the second mode. In this description, where not explicitly stated otherwise, the wording "between first and second" optionally covers the wording "between second and first". The controller is configured to switch the modem to cause data transmitted/received in accordance with the first protocol to be transmitted/received during a timing associated with data of the second protocol. Hereby, the modem is configured to register the modem as a member of different networks defined by first devices that support the first protocol and second devices that support the second protocol,to demodulate network schedule information from the first and second protocols, and to operate as a proxy between the first protocol and the second protocol by communicating the schedule information from each network to the Domain Master on each network.

In an embodiment, the protocols are each defined in a standard supported by a respective device. Typically, a standard includes a definition of at least one protocol defined in a selected layer in a multi-layer transmission model such as the Open Systems Interconnection (OSI) model. In the present description, where a first protocol and a second protocol are mentioned, the first protocol and the second protocol are understood to be defined in the same layer of the multi-layer transmission model. Further, first protocol and second protocol are understood to be defined in different standards such that the first protocol and the second protocol are not aligned and a device that is defined to support the first standard does not for that reason alone also support the second standard, and vice versa.

At least one effect of the foregoing modem is that the present embodiments participate in both network domains simultaneously and dynamically switch to allow reliable communication between the two network domains following the corresponding standards. Bandwidth can then be efficiently used between the two networking domains and information can be passed from one domain to the other.

In an embodiment, the modem further comprises a shared logical unit that is adapted to consolidate at least one common functionality for both standards/protocols. At least one effect of the foregoing is that the shared logical unit processes data for transmission/reception according to both standards/protocols, thereby eliminating redundancies in functionalities and equipment.

In an embodiment of the modem according to the invention in the first aspect, the common functionality is modulation/demodulation of signal corresponding to the data. At least one effect of the foregoing is that the shared logical unit processes data for transmission/reception according to a common modulation/demodulation technique, thereby eliminating redundancies in functionalities and equipment.

In an embodiment of the modem, the first and second protocols are selected from a group of standards including the group consisting of G.hn, HomePlug, HomePlug AV, IEEE 1901, Powerline, IEEE 902.11x, HPNA, MOCA, G.HNem, G3, and Prime. In a particular embodiment, both the first and second protocols are selected from the group of standards consisting of G.hn, HomePlug, HomePlug AV, IEEE 1901, Powerline, IEEE 902.11x, HPNA, MOCA, G.HNem, G3, and Prime.

In an embodiment, the modem is configured as a proxy adapted to receive and forward data between a first coupled device configured to support the first standard and a second coupled device configured to support the second standard. At least one effect of the foregoing is that as a proxy the communicating data from each network to the Domain Master on each network is possible so optimization can be done by the Domain Masters.

In an embodiment, the modem is configured to reformat data formatted according to the first protocol for transmission into a format according to the second protocol.

In a further aspect, the invention encompasses a method for controlling a Home Network coupling a plurality of devices that support a standard to transmit/receive data over the Home Network, wherein the supported standard can differ from one coupled device to another. The method comprises transmitting and/or receiving data according to both a first protocol of a first standard for Home Networking and a second protocol of a second standard for Home Networking, dynamically switching a modem between a first and a second mode. The first mode transmits/receives data according to the first protocol for Home Networking between coupled devices of the Home Network; the second mode transmits/receives data according to the second protocol for Home Networking between coupled devices of the Home Network. The method comprises switching the modem to cause data transmitted/received in accordance with the first standard/protocol to be transmitted/received during a timing associated with data of the second standard/protocol. The method further comprises registering the modem as a member of different networks defined by first devices that support the first protocol and second devices that support the second protocol, demodulating network schedule information from the first and second protocols, and operating as a proxy between the first protocol and the second protocol by communicating the schedule information from each network to the Domain Master on each network. At least one effect of the foregoing method is that the present embodiments participate in both network domains simultaneously and dynamically switch to allow reliable communication between the two network domains following the corresponding standards. Bandwidth can then be efficiently used between the two networking domains and information can be passed from one domain to the other.

In an embodiment of the method, a further step includes consolidating at least one common functionality
on a shared logical unit that processes data for transmission/reception according to both standards/protocols. At least one effect of the foregoing is that the shared logical unit processes data for transmission/reception according to both standards/protocols, thereby eliminating redundancies in functionalities and equipment.

In an embodiment of the method, the first and second protocols are selected from a group of standards including the group consisting of G.hn, HomePlug, HomePlug AV, IEEE 1901, Powerline, IEEE 902.11x, HPNA, MOCA, G.HNem, G3, and Prime. In a particular embodiment, the first and second protocols are selected from the group of standards consisting of G.hn, HomePlug, HomePlug AV, IEEE 1901, Powerline, IEEE 902.11x, HPNA, MOCA, G.HNem, G3, and Prime.

In an embodiment of the method, the step of switching switches the modem between the first and second modes an a packet by packet basis. At least one effect of the foregoing is that the switching on a packet basis enables very rapid switching to accommodate data in the first and second standards/protocols.

In an embodiment of the method, a further step includes demodulating transmission schedule information from data of both the first and second standards/protocols, in particular, from both data formatted according to the first protocol and data formatted according to the second protocol.

In an embodiment of the method, a further step includes configuring the modem as a proxy to receive and forward data between devices of both the first and second standards/protocols. Thus, in an embodiment, the modem is configured as a proxy to receive and forward data between both a coupled device that supports the first standard and a coupled device that supports the second standard. At least one effect of the foregoing is that, as a proxy, the communicating of the data from each network to the Domain Master on each network is possible so optimization can be done by the Domain Masters.

In an embodiment of the method, a further step includes configuring the modem to reformat data for the first standard/protocol for transmission according to the second standard/protocol. Thus, the modem is configured to reformat data that are formatted for transmission according to the first protocol in a format for transmission according to the second protocol.

Following is a detailed description of embodiments with reference to the accompanying figures. In the figures, the left-most digit(s) of a reference number identifies the figure in which the reference number first appears. The use of the same reference number in different instances in the description and the figures may indicate similar or identical items.
Figure 1 illustrates an exemplary typical Home Network topology.
Figure 2 illustrates a possible arrangement of the Multimode Modem according to the present embodiments.
Figure 3 illustrates an embodiment implemented in a homogeneous Home Network.
Figure 4 illustrates an embodiment implemented in a heterogeneous Home Network.

The instant description operates methods, devices and systems that operate a modem or plurality of modems in a Multimode configuration to communicate with different modems that operate in only one standard or protocol, or are of different standards or protocols.

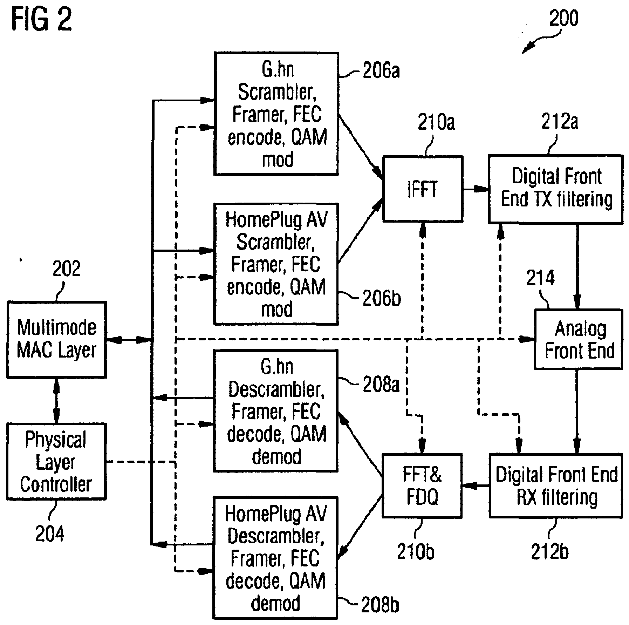

With reference to Fig. 2, an example of the inventive Multimode Home Networking modem 200 is herein described. In this example, the Multimode Modem 200 supports the HomePlug AV and ITU G.hn standards. However, it shall be reiterated that embodiments are not so relegated to these specific Standards. Further, the Modem 200 of the exemplary figure is designed into a single Modem 200, although the elements shown in the figure may also be distributed across different devices. In addition, it shall be appreciated that there are numerous ways to partition and combine the functional blocks of the exemplary configuration set forth herein.

Now in more particular detail, there is provided a Multimode MAC Layer 202 that provides the media access control layer, which provides addressing and channel access control mechanisms that, for example, make it possible for several terminals or network nodes to communicate within a multi-point network. Coupled thereto is a Physical Layer (PHY) Controller 204 that defines the electrical and physical specifications for devices. In particular, it defines the relationship between a device and a transmission medium, such as a copper or optical cable. This includes the layout of pins, voltages, cable specifications, hubs, repeaters, network adapters, host bus adapters (HBAs used in storage area networks), etc. Various MAC and PHY layer control protocol are known, for example, according to the Open Systems Interconnection model (OSI), and the details of such will be readily understood by those in the field of art and, therefore, not delineated here.

The MAC and/or PHY controllers 202, 204 coordinate the activation of the correct blocks to transmit signals with the desired standards format. In other words, MAC and/or PHY controllers 202, 204 switch the inventive device between modes.

To continue the MAC and PHY layers 202, 204 are coupled to processing and devices that are specific to the various Standards and/or protocols. These include, on the transmission side, devices that include the functions of scrambling, framing, Forward Error Correction (FEC) encoding and modulation, e.g., Quadrature Amplitude Modulation (QAM), for example. For convenience, these functionalities are converged into one box for respective protocols to illustrate features that are specific to a particular protocol and, therefore, require different logic to handle the different protocols. For example, it is the case that the FEC encoding for G.hn differs from HomePlug and requires a separate device. G.hn, for example, employs a Low-density parity-check code (LDPC) while HomePlug employs a Turbo code.

Therefore, there is shown a specific processing block for processing signals for transmission according to the first protocol, G.hn, 206a on the transmission side and for reception according to G.hn 208a on the reception side. There is further provided the features and devices specific to the different or second protocol, Homeplug, for transmitting signals 206b and, respectively, for receiving signals 208b.

However, it shall be appreciated that different standards and/or protocols may share certain functionalities in common. It may be that different, for example, the HomePlug and IEEE 1901 overlap in several areas, such as FEC encoding, and these functionalities do not require separate devices.

This is illustrated in the drawings of the originally filed provisional application, wherein the modulation functionality, i.e.. here Fast/Inverse Fast Fourier Transform (FFT/IFFT), is consolidated for the different protocols. Shown here, the IFFT for the transmission side 210a is consolidated into a single device or logic for both the G.hn and HomePlug standards (and similarly FFT &FDQ 210b is consolidated into a sole device or logic for the reception side.) Where other functionalities are shared, such as those of the HomePlug and IEEE 1901 standard, these functionalities may be shared by a single device. It should be pointed out that consolidating the common functionality for different standards and/or protocols is clearly advantageous as it minimizes duplicitous logic and, therefore, reduces the overall space required for silicon.

Returning now the explanation of Fig. 2, there is further provided I/O for the device in the form of a Digital Front End (again for both transmission and reception sides) 212a and 212b as well as an Analog Front End 214. The A/D front end units provide the typical A/D or D/A conversion required according to known techniques and are not detailed here.

In operation, the MAC and the PHY layer 202, 204 controllers manage the transmission and reception mechanism of physical layer blocks. When operating in the first mode, i.e., G.hn mode, the transmit signals are sent through the G.hn physical layer blocks 206a where the information is scrambled, framed, forward error correction is applied (LDPC for G.hn), and mapped to QAM constellations. The signal is then converted to the time domain by the IFFT 210a, digital filtering is applied by Digital Front End 212a and the signal is sent to the Analog Front End 214 for transmission over the wire.

Similarly, when transmitting in the HomePlug AV mode, the signal goes through the functionally equivalent HomePlug AV physical layer blocks 206b and then out onto the line via the common IFFT 210a and I/O 212a, 214. As already discussed, the physical layer controller and MAC coordinate the activation of the correct blocks to transmit signals with the desired standards format.

In an analogous fashion, the received signals are routed through the correct physical layer blocks 208a, 208b depending on the mode of operation (ITU G.hn or HomePlug AV) for demodulation and passing on the data to the MAC layer 202. It is the responsibility of the MAC and Physical Layer controller 202, 204 to configure the blocks dynamically for the correct operational mode. The configuration of blocks showed as common (e.g. IFFT/FFT or TX/RX digital filtering) between HomePlug AV & ITU G.hn is also possible as part of selecting the correct operational mode depending on the Modem 200 implementation details.

The selection of the operative mode will now be described. When the Multimode Modem 200 is activated, it demodulates and processes signals from any and all networks. It also transmits signals on all networks to provide full communication between Modem 200 nodes. For this example, we assume that the Multimode Modem 200 detects the ITU G.hn network first. The Multimode Modem 200 registers on the network as an ITU G.hn Modem 200 and operates in the ITU G.hn mode. The Multimode Modem 200 demodulates the network schedule information (referred to as a Media Access Plan (MAP) in ITU G.hn) and fully participates In the ITU G.hn network communication.

Next the Multimode Modem 200 detects the HomePlug AV network. The Multimode Modem 200 will then register on this network as a HomePlug AV Modem 200 and operate in the HomePlug AV mode. The Multimode Modem 200 demodulates the network schedule information (Beacon in HomePlug AV) and fully participates in the HomePlug AV network communication. Of course, the Multimode Modem could also detect the HomePlug network first and the sequence of the aforedescribed features will be exchanged.

As already described, different networks typically provide for collision avoidance/detection in mixed network environments. To that end, certain standards have provided that time blocks for each network should be non-overlapping. In the previous solution described above, the concept was that the G.hn devices should compete for G.hn timeslots while avoiding HomePlug timeslots, for example. Due to the coordination outlined in ITU G.cx (or IEEE P1901) and the schedule of TX and RX information for both networks is known to the Multimode Modem 200, the MAC I Physical Layer Controller 202/204 configures the Multimode Modem 200 to operate in the appropriate mode at the correct time, that is, in a timeslot delineated for one of the standards.

In other words, the instant embodiment is capable of selecting timeslots for one standard / protocol during timeslots assigned to a completely different standard (or protocol). Since the present embodiment dynamically operates in different modes, the modes (and therefore the timeslots) are selectable on the fly. Thus, the configuration is performed on an arbitrary time level. For example, the MAC / PHY (202/204) may divide up the time blocks into two separate continuous blocks spanning the MAP/Beacon period. In another secnario, the MAC / PHY layer controllers 202/204 implement the time division on a packet by packet basis, that is, within the same timeslot. The packets, in another example, are interleaved between the different networks or, for that matter, in any order selected by the MAC/PHY layer controllers. It will be immediately appreciated that the approach of the present embodiment greatly improves bandwidth because all timeslots are now available for transmission (reception) in a mixed network environment.

It shall be appredated that higher functionality is also brought to the multi-standard network. In one aspect, the Multimode Modem 200 operates as the domain master. This is now possible with the present embodiment because the Multimode Modem 200 has access to the timing schedules of all of the standards/protocols of the network or networks coupled thereto. In other words, and for example, the Multimode Modem 200 of the present embodiment can listen for the MAPs of the G.hn and simultaneously listen for Beacons of HomePlug. The Multimode Modem 200 then operates to coordinate the traffic over the network for all standards (protocols). Thus, the present embodiment optimizes the partition of the bandwidth between networks.

The Multimode Modem 200 has full knowledge of the scheduled transmissions for each network. It then allocates bandwidth more efficiently such that the network with the higher data load or higher instances of participating modems can be given a larger share of the bandwidth on a time slot basis.

Alternatively, the Multimode Modem 200 can act as a Proxy in a mixed protocol network by communicating the scheduling information from each network to the Domain Master on each network so optimization can be done by the Domain Masters. In the opposite direction, the Multimode Modem 200 relays signals from the Domain Masters of the various standards (protocol) devices to other nodes in the network, such as hidden nodes.

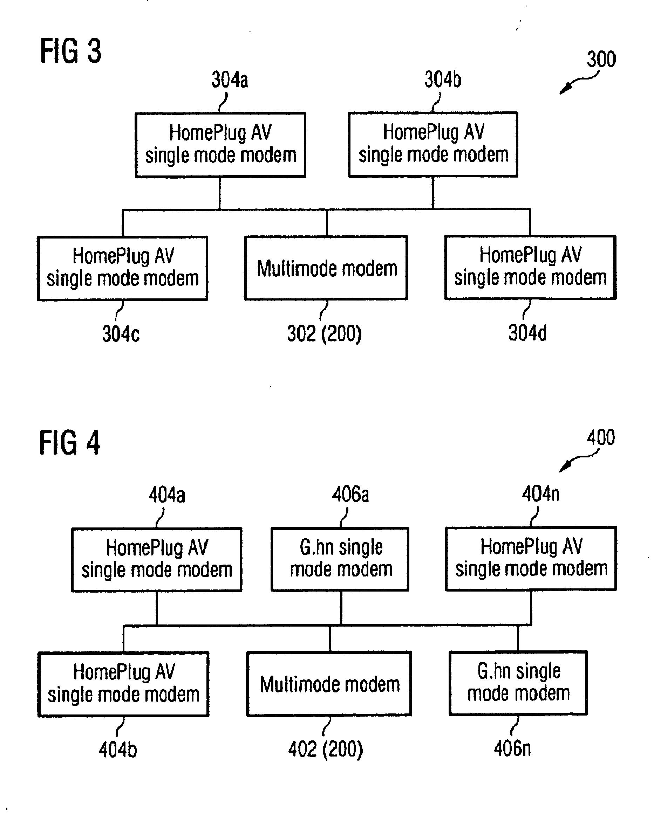

The Multimode Modem described herein is flexibly realizable in any configuration of a multi-standard (protocol) Home Network. Figure 3, for example, illustrates the case where the Multimode modem 200 is configured in a homogeneous Home Network 300. In the example illustrated, the Multimode Modem 302 (200 in Figure 2) is coupled to a number of HomePlug AV devices (modems) 304a-d. As mentioned exhaustively throughout this description, the Home Network may include any and/or all standards (protocol) compliant devices.

Continuing with Fig. 3, the Multimode Modem 302, upon being activated, demodulates and processes the signals from the HomePlug AV network. Given that there is only single HomePlug AV modems 304a-d in this example, the Multimode Modem 302 registers on the network as a HomePlug AV modem and operates in HomePlug AV mode. The Multimode modem demodulates the network schedule information (referred to as a Beacon in HomePlug AV) and fully participates in the network communication as per the operation described in reference to Figure 2. The schedule information is communicated by the network domain master, for example.

As mentioned, the Multimode modem can perform the scheduling task and become the domain master, but it can also be a simple client modem. With the Multimode modem's ability to operate in the HomePlug AV configuration, the network depicted in Figure 3 remains a homogeneous network of all HomePlug AV modems.

To further illustrate the flexibility of the Multimode Modem, we next consider the case of a heterogeneous Home Network 400 including the Multimode Modem 402 one or more single mode HomePlug AV modems 404a-n and one or more mode ITU G.hn single mode modems 406a-n as illustrated in Figure 4.

As the single mode ITU G.hn and HomePlug AV modems 402a-n, 404a-n in Figure 4 have different protocol and modulation parameters, these modems cannot normally communicate with each other to pass data. There are provisions for these networks to co-exist by exchanging information to partition the availability of network in distinct, non-overlapping blocks of time. This is covered in IEEE P1901 and ITU G.cx.

In a simple case, the ITU G.hn network can transmit and receive over the wireline channel for half of a given time block (e.g. the MAC cycle) and the HomePlug AV network can transmit and receive over the wireline channel for the other half of a given time block. If the Multimode Modem 402 is not present, this network will consist of two distinct homogeneous networks: one operating in ITU G.hn mode and one in HomePlug AV mode over different time intervals.

By introducing the Multimode Modem 402 in Figure 4 with the ability to dynamically switch between modes, a heterogeneous network is created where communication between all modem nodes is possible. Of course, a plurality of Multimode Modems 400 may also be provided in such a Home Network 400. As in the case described with reference to Figure 2, The Multimode modem demodulates the network schedule Information (referred to as a Beacon in HomePlug AV) and fully participates in the network communication for all standards/protocols.

As in the example of Figure 3, Multimode Modem 402 may act as a bridge (Proxy) to relay information from a single mode G.hn modem to a single mode HomePlug AV modem, thus enabling all modems to communicate in this heterogeneous network.

For the purposes of this disclosure and the claims that follow, the terms "coupled" and "connected" have been used to describe how various elements interface. Such described interfacing of various elements may be either direct or indirect. Although the subject matter has been described in language specific to structural features and/or methodological acts, it is to be understood that the subject matter defined in the appended claims is not necessarily limited to the specific features or acts described. Rather, the specific features and acts are disclosed as preferred forms of implementing the claims. The specific features and acts described in this disclosure and variations of these specific features and acts may be implemented separately or may be combined.

## Claims

1. A modem (200) for use in a Home Network (300, 400), the modem (200) being adapted to couple devices that each support a standard for transmitting/receiving data over the Home Network (300, 400), wherein the supported standard can differ from one coupled device to another, the modem further being configured to transmit and/or receive data in both a first mode and a second mode,
- wherein the first mode provides a first protocol for use in transmitting and/or receiving data between devices of the Home Network (300, 400);
- wherein the second mode provides a second protocol for use in transmitting and/or receiving data between devices of the Home Network (300, 400);
a controller (204) adapted to dynamically switch the modem (200) between the first mode and the second mode; wherein the controller (204) is configured to switch the modem (200) to cause data transmitted/received in accordance with the first protocol to be transmitted/received during a timing associated with data of the second protocol,
**characterized in that**
the modem (200) is configured
to register the modem as a member of different networks (300, 400) defined by first devices that support the first protocol and second devices that support the second protocol,
to demodulate transmission schedule information from both data formatted according to the first protocol and data formatted according to the second protocol, and
to operate as a proxy between the first protocol and the second protocol by communicating the schedule information from each network to the Domain Master on each network.

2. The modem (200) of claim 1, further comprising a shared logical unit that is adapted to consolidate at least one common functionality for both protocols, such that the shared logical unit processes data for transmission/reception according to both protocols.

3. The modem (200) of claim 2, wherein the common functionality is a modulation/demodulation of signals corresponding to the data.

4. The modem (200) of any of the preceding claims, wherein the first protocol and the second protocol are each selected from a group of standards consisting of G.hn, HomePlug, HomePlug AV, IEEE 1901, Powerline, IEEE 902.11x, HPNA, MOCA, G.HNem, G3, and Prime.

5. The modem (200) of any of the preceding claims, wherein the modem (200) is configured as a proxy adapted to receive and forward data between both a coupled device that supports the first protocol and a coupled device that supports the second protocol.

6. The modem (200) of any of the preceding claims, wherein the modem (200) is configured to reformat data formatted according to the first protocol for transmission into a format according to the second protocol.

7. A method performed in a modem for controlling a Home Network (300, 400), the Home Network (300, 400) coupling a plurality of devices that each support a standard for transmitting/receiving data over the Home Network (300, 400), wherein the supported standard can differ from one coupled device to another, the method comprising:
transmitting and/or receiving data according to both a first protocol of a first standard for Home Networking and a second protocol of a second standard for Home Networking, dynamically switching the modem (200) between a first mode and a second mode;
the first mode transmits/receives data according to the first protocol between the coupled devices;
the second mode transmits/receives data according to the second protocol between the coupled devices; and
switching the modem (200) to cause data transmitted/received in accordance with the first protocol to be transmitted/received during a timing associated with data of the second protocol,
**characterized by**
registering the modem as a member of different networks (300, 400) defined by first devices that support the first protocol and second devices that support the second protocol,
demodulating transmission schedule information from both data formatted according to the first protocol and data formatted according to the second protocol, and
operating as a proxy between the first protocol and the second protocol by communicating the schedule information from each network to the Domain Master on each network.

8. The method of claim 7, further comprising the step of consolidating at least one common functionality on a shared logical unit that processes data for transmission/reception according to both protocols.

9. The method of claim 7 or claim 8, wherein the first protocol and the second protocol are each selected from a group of standards consisting of G.hn, HomePlug, HomePlug AV, IEEE 1901, Powerline, IEEE 902.11x, HPNA, MOCA, G.HNem, G3, and Prime.

10. The method of any of claims 7 to 9, wherein the step of switching switches the modem (200) between the first mode and the second mode on a packet by packet basis.

11. The method of any of claims 7 to 10, further comprising the step of configuring the modem (200) as a proxy to receive and forward data between both a coupled device that supports the first standard and a coupled device that supports the second standard.

12. The method of any of claims 7 to 11, further comprising the step of configuring the modem (200) to reformat data that are formatted for transmission according to the first protocol in a format for transmission according to the second protocol.

## Patentansprüche

1. Modem (200) zur Verwendung in einem Heimnetzwerk (300, 400), wobei das Modem (200) eingerichtet ist zum Koppeln von Geräten, die jeweils einen Standard zum Senden/Empfangen von Daten über das Heimnetzwerk (300, 400) unterstützen, wobei sich der unterstützte Standard von einem Gerät zu einem anderen unterscheiden kann, wobei das Modem ferner ausgelegt ist zum Senden und/oder Empfangen von Daten in sowohl einem ersten Modus als auch einem zweiten Modus,
- wobei der erste Modus ein erstes Protokoll zur Verwendung beim Senden und/oder Empfangen von Daten zwischen Geräten des Heimnetzwerks (300, 400) bereitstellt;
- wobei der zweite Modus ein zweites Protokoll zur Verwendung beim Senden und/oder Empfangen von Daten zwischen Geräten des Heimnetzwerks (300, 400) bereitstellt;
ein Controller (204), eingerichtet zum dynamischen Umschalten des Modems (200) zwischen dem ersten Modus und dem zweiten Modus; wobei der Controller (204) ausgelegt ist zum Umschalten des Modems (200), um zu veranlassen, dass gemäß dem ersten Protokoll gesendete/empfangene Daten während eines mit Daten des zweiten Protokolls verknüpften Timings gesendet/empfangen werden,
**dadurch gekennzeichnet, dass**
das Modem (200) ausgelegt ist zum
Registrieren des Modems als ein Mitglied verschiedener Netzwerke (300, 400), definiert durch erste Geräte, die das erste Protokoll unterstützen, und durch zweite Geräte, die das zweite Protokoll unterstützen, Demodulieren von Sendezeitplaninformationen von sowohl gemäß dem ersten Protokoll formatierten Daten als auch gemäß dem zweiten Protokoll formatierten Daten, und Betrieb als ein Proxy zwischen dem ersten Protokoll und dem zweiten Protokoll durch Kommunizieren der Zeitplaninformationen von jedem Netzwerk an den Domänen-Master auf jedem Netzwerk.

2. Modem (200) nach Anspruch 1, ferner umfassend eine gemeinsam genutzte Logikeinheit, die eingerichtet ist zum Konsolidieren von mindestens einer gemeinsamen Funktionalität für beide Protokolle, so dass die gemeinsam genutzte Logikeinheit Daten für Senden/Empfangen gemäß beiden Protokollen verarbeitet.

3. Modem (200) nach Anspruch 2, wobei die gemeinsame Funktionalität eine Modulation/Demodulation von den Daten entsprechenden Signalen ist.

4. Modem (200) nach einem der vorhergehenden Ansprüche, wobei das erste Protokoll und das zweite Protokoll jeweils aus einer Gruppe von Standards ausgewählt sind, die aus G.hn, HomePlug, HomePlug AV, IEEE 1901, Powerline, IEEE 902.11x, HPNA, MOCA, G.HNem, G3 und Prime besteht.

5. Modem (200) nach einem der vorhergehenden Ansprüche, wobei das Modem (200) als ein Proxy konfiguriert ist, der eingerichtet ist zum Empfangen und Weiterleiten von Daten zwischen sowohl einem gekoppelten Gerät, das das erste Protokoll unterstützt, als auch einem gekoppelten Gerät, das das zweite Protokoll unterstützt.

6. Modem (200) nach einem der vorhergehenden Ansprüche, wobei das Modem (200) konfiguriert ist zum Neuformatieren von Daten, die gemäß dem ersten Protokoll formatiert sind, zur Sendung in einem Format gemäß dem zweiten Protokoll.

7. Verfahren durchgeführt in einem Modem zur Steuerung eines Heimnetzwerks (300, 400), wobei das Heimnetzwerk (300, 400) eine Vielzahl von Geräten koppelt, die jeweils einen Standard zum Senden/Empfangen von Daten über das Heimnetzwerk (300, 400) unterstützen, wobei sich der unterstützte Standard von einem gekoppelten Gerät zu einem anderen unterscheiden kann, wobei das Verfahren die folgenden Schritte umfasst:
Senden und/oder Empfangen von Daten gemäß sowohl einem ersten Protokoll eines ersten Standards für Heimnetvernetzung als auch einem zweiten Protokoll eines zweiten Standards für Heimnetvernetzung, dynamisches Umschalten des Modems (200) zwischen einem ersten Modus und einem zweiten Modus;
der erste Modus sendet/empfängt Daten gemäß dem ersten Protokoll zwischen den gekoppelten Geräten;
der zweite Modus sendet/empfängt Daten gemäß dem zweiten Protokoll zwischen den gekoppelten Geräten; und
Umschalten des Modems (200), um zu veranlassen, dass gemäß dem ersten Protokoll gesendete/empfangene Daten während eines mit Daten des zweiten Protokolls verknüpften Timings gesendet/empfangen werden,
**gekennzeichnet durch**
Registrieren des Modems als ein Mitglied verschiedener Netzwerke (300, 400), definiert durch erste Geräte, die das erste Protokoll unterstützen, und durch zweite Geräte, die das zweite Protokoll unterstützen,
Demodulieren von Sendezeitplaninformationen von sowohl gemäß dem ersten Protokoll formatierten Daten als auch gemäß dem zweiten Protokoll formatierten Daten, und
Betreiben als ein Proxy zwischen dem ersten Protokoll und dem zweiten Protokoll durch Kommunizieren der Zeitplaninformationen von jedem Netzwerk an den Domänen-Master auf jedem Netzwerk.

8. Verfahren nach Anspruch 7, ferner umfassend den Schritt des Konsolidierens von mindestens einer gemeinsamen Funktionalität in einer gemeinsam genutzten Logikeinheit, die Daten für Senden/Empfangen gemäß beiden Protokollen verarbeitet.

9. Verfahren nach Anspruch 7 oder Anspruch 8, wobei das erste Protokoll und das zweite Protokoll jeweils aus einer Gruppe von Standards ausgewählt ist, die aus G.hn, HomePlug, HomePlug AV, IEEE 1901, Powerline, IEEE 902.11x, HPNA, MOCA, G.HNem, G3 und Prime besteht.

10. Verfahren nach einem der Ansprüche 7 bis 9, wobei der Schritt des Umschaltens das Modem (200) zwischen dem ersten Modus und dem zweiten Modus auf einer von-Paket-zu-Paket-Basis umschaltet.

11. Verfahren nach einem der Ansprüche 7 bis 10, ferner umfassend den Schritt des Konfigurierens des Modems (200) als einen Proxy zum Empfangen und Weiterleiten von Daten zwischen sowohl einem gekoppelten Gerät, das das erste Protokoll unterstützt, als auch einem gekoppelten Gerät, das das zweite Protokoll unterstützt.

12. Verfahren nach einem der Ansprüche 7 bis 11, ferner umfassend den Schritt des Konfigurierens des Modems (200) zum Neuformatieren von Daten, die gemäß dem ersten Protokoll formatiert sind, zur Sendung in einem Format gemäß dem zweiten Protokoll.

## Revendications

1. Modem (200) destiné à être utilisé dans un réseau domestique (300, 400), le modem (200) étant conçu pour coupler des dispositifs qui prennent chacun en charge une norme pour transmettre/recevoir des données sur le réseau domestique (300, 400), dans lequel la norme prise en charge peut différer d'un dispositif couplé à l'autre, le modem étant en outre configuré pour transmettre et/ou recevoir des données à la fois dans un premier mode et dans un second mode,
- dans lequel le premier mode fournit un premier protocole destiné à être utilisé lors de la transmission/réception de données entre des dispositifs du réseau domestique (300, 400) ;
- dans lequel le second mode fournit un second protocole destiné à être utilisé lors de la transmission/réception de données entre des dispositifs du réseau domestique (300, 400) ;
un dispositif de commande (204) conçu pour commuter de manière dynamique le modem (200) entre le premier mode et le second mode; dans lequel le dispositif de commande (204) est configuré pour commuter le modem (200) pour contraindre des données transmises/reçues selon le premier protocole à être transmises/reçues pendant un moment associé à des données du second protocole,
**caractérisé en ce que**
le modem (200) est configuré
pour enregistrer le modem en tant que membre de différents réseaux (300, 400) définis par des premiers dispositifs qui prennent en charge le premier protocole, et par des seconds dispositifs qui prennent en charge le second protocole,
pour démoduler des informations de planification de transmission à la fois à partir de données formatées selon le premier protocole et à partir de données formatées selon le second protocole et
pour fonctionner comme un serveur mandataire entre le premier protocole et le second protocole en communiquant les informations de planification depuis chaque réseau au maître de domaine sur chaque réseau.

2. Modem (200) selon la revendication 1, comprenant en outre une unité logique partagée qui est conçue pour consolider au moins une fonctionnalité commune pour les deux protocoles de telle sorte que l'unité logique partagée traite des données pour une transmission/réception selon les deux protocoles.

3. Modem (200) selon la revendication 2, dans lequel la fonctionnalité commune est une modulation/démodulation de signaux correspondant aux données.

4. Modem (200) selon l'une quelconque des revendications précédentes, dans lequel le premier protocole et le second protocole sont chacun sélectionnés dans un groupe de normes constitué par les normes G.hn, HomePlug, HomePlug AV, IEEE 1901, Powerline, IEEE 902.11x, HPNA, MOCA, G.HNem, G3 et Prime.

5. Modem (200) selon l'une quelconque des revendications précédentes, dans lequel le modem (200) est configuré sous la forme d'un serveur mandataire conçu pour recevoir et expédier des données à la fois entre un dispositif couplé qui prend en charge le premier protocole, et un dispositif couplé qui prend en charge le second protocole.

6. Modem (200) selon l'une quelconque des revendications précédentes, dans lequel le modem (200) est configuré pour reformater des données formatées selon le premier protocole pour une transmission dans un format selon le second protocole.

7. Procédé réalisé dans un modem pour commander un réseau domestique (300, 400), le réseau domestique (300, 400) couplant une pluralité de dispositifs qui prennent chacun en charge une norme pour transmettre/recevoir des données sur le réseau domestique (300, 400), dans lequel la norme prise en charge peut différer d'un dispositif couplé à l'autre, le procédé consistant :
à transmettre et/ou à recevoir des données à la fois selon un premier protocole d'une première norme pour une réseautique domestique et selon un second protocole d'une seconde norme pour une réseautique domestique,
à commuter de manière dynamique le modem (200) entre un premier mode et un second mode ;
le premier mode transmet/reçoit des données selon le premier protocole entre les dispositifs couplés ;
le second mode transmet/reçoit des données selon le second protocole entre les dispositifs couplés ; et
à commuter le modem (200) pour contraindre des données transmises/reçues selon le premier protocole à être transmises/reçues pendant un moment associé à des données du second protocole,
**caractérisé en ce qu'**il consiste
à enregistrer le modem en tant que membre de différents réseaux (300, 400) définis par des premiers dispositifs qui prennent en charge le premier protocole, et par des seconds dispositifs qui prennent en charge le second protocole,
à démoduler des informations de planification de transmission à la fois à partir de données formatées selon le premier protocole et à partir de données formatées selon le second protocole et
à fonctionner comme un serveur mandataire entre le premier protocole et le second protocole en communiquant les informations de planification depuis chaque réseau au maître de domaine sur chaque réseau.

8. Procédé selon la revendication 7, comprenant en outre l'étape consistant à consolider au moins une fonctionnalité commune sur l'unité logique partagée qui traite des données pour une transmission/réception selon les deux protocoles.

9. Procédé selon la revendication 7 ou la revendication 8, dans lequel le premier protocole et le second protocole sont chacun sélectionnés dans un groupe de normes constitué par les normes G.hn, HomePlug, HomePlug AV, IEEE 1901, Powerline, IEEE 902.11x, HPNA, MOCA, G.HNem, G3 et Prime.

10. Procédé selon l'une quelconque des revendications 7 à 9, dans lequel l'étape de commutation commute le modem (200) entre le premier mode et le second mode sur une base paquet par paquet.

11. Procédé selon l'une quelconque des revendications 7 à 10, comprenant en outre l'étape consistant à configurer le modem (200) sous la forme d'un serveur mandataire pour recevoir et expédier des données à la fois entre un dispositif couplé qui prend en charge la première norme, et un dispositif couplé qui prend en charge la seconde norme.

12. Procédé selon l'une quelconque des revendications 7 à 11, comprenant en outre l'étape consistant à configurer le modem (200) pour reformater des données qui sont formatées pour une transmission selon le premier protocole dans un format pour une transmission selon le second protocole.
